# EUROPEAN PATENT APPLICATION

(11) **EP 0 701 855 A1**
(43) Date of publication of application: **20.03.1996**
(21) Application number: 94202681.6
(22) Date of filing: 16.09.1994
(51) Int. Cl.: B01D 53/04, B01D 46/42, B01D 29/62

(54) **Fluid flow filtering system with filter cleaning devices**

(71) Applicant: DEPUR ITALIA S.r.l., I-40068 S. Lazzaro di Savena (Bologna) (IT)
(72) Inventor: Magliano, Oscar, I-20147 Milano (IT)
(74) Representative: Faraggiana, Vittorio, Dr. Ing.

(57) **Abstract**

A system (10) for filtering a process fluid flow by means of passage through filters (18) comprises upstream and downstream of the filters means (19, 20) for selective connection of said filters with a washing fluid circulation path. Advantageously the connection means (19, 20) comprise means (23, 24, 33, 34, 133) of moving connection plugs (21, 22, 121) which are substantially staunch at two input and output ends (41, 42, 141) of a filter (18) for its isolation from the process fluid flow with each plug (21, 22, 121) comprising ducts (29, 30, 129, 153) for connection of the isolated filter to said washing fluid circulation path.

## Description

In the technology, systems for the treatment of fluid flows such as air, process gas a.s.o., etc. by passage through filtering elements, e.g. comprising absorption filter, activated carbons, are well known. A problem with such systems is the necessity of periodically replacing or cleaning / washing the exhausted filters with consequent stoppage of the filtration system.

To seek to obviate the problem of stopping the filtration there have been proposed systems wherein the whole filtration capacity or the total number of filters is divided into independent sections. Therefore, it is possible to stop alternatively one single filtering section at one time for replacing / washing, while the remaining filtering sections can operate. To maintain full continuous filtration capacity, the filtering system has to be oversized by one additional filtering section as stand-by: when there is no oversizing, the filtration capacity will be lower during the cleaning of a filtering section or group of filters.

We specifically consider those systems where filter cleaning is done on the spot by feeding into the filter, which has to be cleaned, a stream of a known washing fluid instead of the process fluid.

To make filtering sections independent one from another in order that they can be one at a time alternatively switched from normal filtering operation to their washing and viceversa, the prior art requires on each filtering section to install valves to control or stop the process fluid flow and/or the washing fluid flow. This system is very expensive and complicated, when the number of sections increases, due to the increasing of the number of valves and relevant piping: therefore the number of filtering sections is held down and the additional capacity of oversizing, to guarantee continuous 100% capacity, is therefore a large one.

Accordingly, this system requires a large flow rate of the washing fluid (for example steam in the case of adsorption filter), to permeate the system. When the washing fluid employed is steam, there are also problems owing to the heating of the system parts in contact with the steam and problems of steam condensation inside the system.

The object of the present invention is to overcome the above shortcomings by supplying a process fluid flow treatment system in which filter cleaning and regeneration might be provided without interrupting the normal operation of the system with minimal cost and less use of washing fluid. This, without high oversizing and without need of set valves for each independent filtering section.

Another object of the present invention is to supply a system wherein filter cleaning is fully and automatically performed by the system itself.

In view of these objects, the present invention provides a treatment system for process fluid flow by means of passage through treatment filters comprising upstream and downstream of the filters movable means of selective connection of said filters to a washing fluid circulation path.

Advantageously the connection means comprise means of movement for connection plugs at input and output ends of a filter. These substantially fluid tight plugs insulated the filter from the process and include piping to connect the insulated filter to said washing fluid circulation path.

To clarify the innovative principles of the present invention and its advantages compared with the known art there is described below with the aid of the annexed drawings a possible embodiment thereof by way of non-limiting example applying said principles. In the drawings:
Fig. 1 shows a partially cross sectioned side view diagram of a fluid treatment plant with filters provided in accordance with the present invention,
Fig. 2 is a detailed view of the system of Fig. 1, showing the arrangement of the filters, and of movable connection plugs.
Fig. 3 shows a possible alternative construction of the movable connection plugs of the system of Fig. 1.

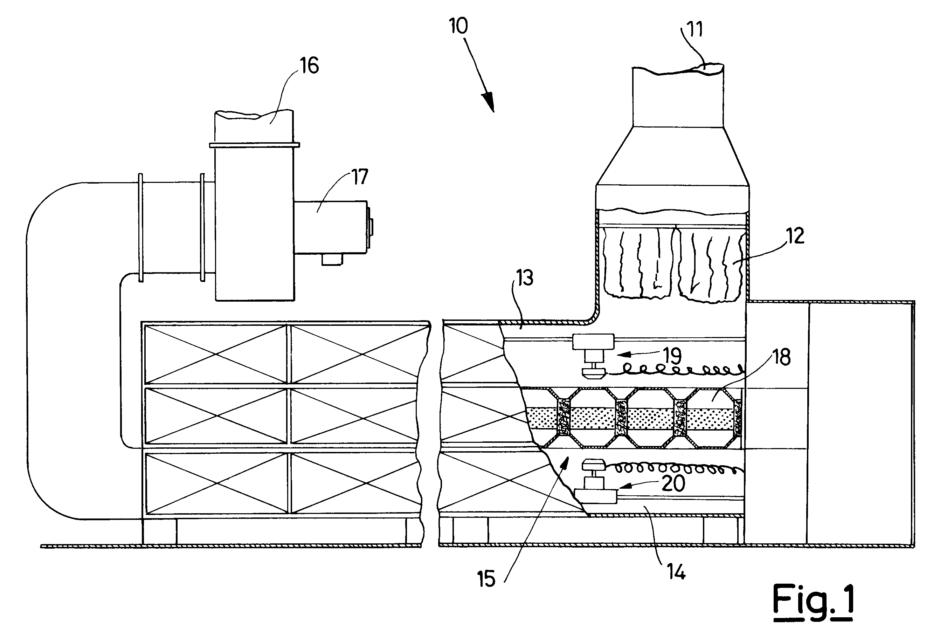

With reference to the figures, Fig. 1 shows a system, indicated generally by reference number 10, for treatment of a process fluid, e.g. gas, air, liquid, etc., entering therein through an input duct or pipe. For the sake of simplicity reference is made below to an air purification system. However, it is understood that the fluid treatment principles of the present invention can be used for other fluid treatment systems. By 'treatment' is meant e.g. separation, adsorption, purification, filtration and conditioning to eliminate solvents, solid particles, etc. from the process fluid.

The input duct can arrive from e.g. known exhaust hoods placed in industrial processing environments such as painting, inking, glue smearing or other processes which disperse in the air pollutants or in any case undesirable substances, e.g. solvents.

The flow of air to be treated enters from the duct 11 and arrives, optionally, through other pre-treatment sections 12, in an input chamber or manifold 13 separated from an output chamber or manifold 14 by means of known filter elements 15. The output chamber or manifold 14 is in turn connected to an output duct or channel 16 optionally comprising a thrust blower 17. The output duct can e.g. convey to an exhaust stack or to an air recirculation system.

The filter elements 15 comprise a plurality of treatment filters 18 separate, mutually parallel and basically placed side by side in a plane transverse to the fluid flow passing between the chambers 13 and 14.

The type of filter will be selected based on the fluid and the impurities to be treated. For example, the filters can be adsorption filters, such as activated carbons, zeolites, activated alumina, silica gel, etc..

In accordance with the innovative principles of the present invention in the two chambers 13 and 14 are present respective movable means 19, 20 for selective connection of the filters with a circulation path for a known washing fluid.

Here, by 'washing fluid' is meant a fluid capable of returning the used filters to optimal treatment. For example, for adsorption filters a known desorption fluid could be used.

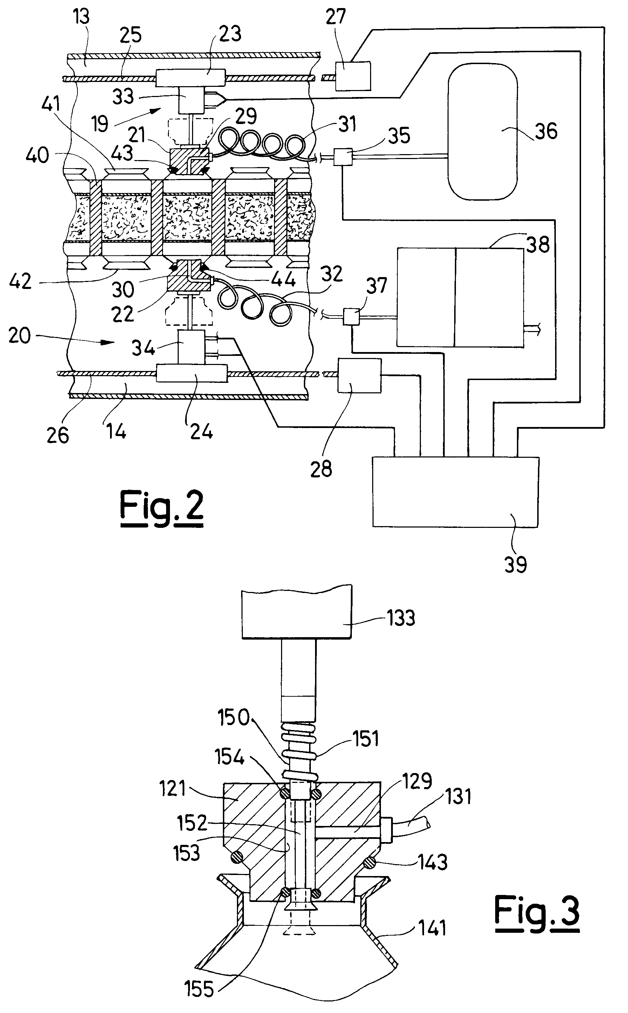

As may be seen better in Fig. 2 the connection means 19, 20 comprise handling means for at least one pair of plugs 21, 22 for connecting them in a basically staunch manner to the input and output ends of a selected filter of the plurality. The filters can e.g. have input and output collars 41, 42 shaped complementarily to the plugs so as to aid sealing. The plugs or collars can optionally also comprise sealing gaskets.

Advantageously the handling means comprise powered trucks, 23, 24 running along guides 25, 26 parallel to the extension plane of the plurality of filters. For example, the powering of the trucks can be achieved with a screw and nut-screw connection and electric motors 27, 28. In addition to the movement parallel to the filters the plugs are movable normally to the filtering plane, i.e. parallel to the traversing direction of the process fluid flow through the mouths of the filters. This movement can be achieved by means of linear actuators 33, 34 e.g. pistons, supported by powered trucks, 23, 24. Upon operation of the linear actuators the plugs are thus movable between a position (shown in broken lines) away from and a position sealed against one end of a facing filter selected by means of the respective powered truck 23, 24.

In the faces of the plugs facing the filters open ducts 29, 30 connected through extensible ducts 31, 32 to the above mentioned washing and regeneration fluid circulation path. As will be clear to those skilled in the art the fluid employed will naturally depend on the nature of the treatment filters 18 and the impurities which they are intended to remove. For example, in the case of adsorption filters such as activated carbon filters for removal of solvents or the like the washing and regeneration fluid can be advantageously steam. In this case one plug of the pair is connected through valve means 35 to a known steam generator 36 while the other plug of the pair is connected through valve means 37 to known steam condensation devices 38. The condensation devices can comprise also known devices for removal and storage of the impurities collected from the steam in its passage through the filters. The purified water thus obtained can be sent back to the steam generation means to obtain a closed circle or appropriately discharged. To avoid steam condensation inside the filters and heat dispersion in the system each filter can be wrapped in a layer 40 of heat insulating material such as rock wool.

The handling means for the pair of plugs 21, 22 and the valve means 35 and 37 are connected for operation to a control device 39 basically of the known art and therefore readily imaginable by those skilled in the art especially in the light of the following explanations.

The device 39, e.g. provided with a microprocessor, commands in a timed manner movement of the plugs so that they couple cyclically in a staunch manner with a filter of the plurality, excluding it from the flow to be treated, as shown in Fig. 2. Then the control device 39 connects the washing fluid circuit with the plugs through the valves 35, 37 so that the selected filter is traversed by the washing fluid. After a period of time pre-set to be sufficient for washing the filter, the control device 39 commands the approach actuators 33, 34 to retract the plugs from contact with the mouths of the reactivated filter.

The control device can then command the powered trucks, 23, 24 to face the plugs against another filter to be cleaned and repeat the isolation and washing cycle and so on from filter to filter.

Various washing sequences can be at this point readily imagined by those skilled in the art. For example the control device 39 can be programmed so that the cleaning operation is continuous with the plugs passing uninterruptedly from one filter to the next. As an alternative the cleaning can be activated at automatically predetermined time intervals or by manual operator control so that, after cleaning of the plurality of filters, the plugs are arranged in a rest and waiting position for a subsequent activation for another cleaning cycle of the plurality of filters.

At this point it is clear how the pre-set purposes have been achieved. In fact, with the described system it is clear that the filtering capacity of the system is not noticeably diminished during the cleaning operations, only a minimal percentage of the filtering surface being occluded by the plugs. Therefore, only a small percentage of oversizing of system filtering capacity is required in order to maintain continuous full filtering system capacity. Thanks to the capability of periodic cleaning at brief intervals without stopping the plant, the filtering system can be kept always at a high level of efficiency without those phenomena of progressive decay of the normal treatment function in the systems of the known art.

Naturally the above description of an embodiment applying the innovative principles of the present invention is given merely by way of example and therefore is not to be taken as a limitation of the patent right claimed here.

For example, Fig. 3 shows a possible variant of the embodiment of the pair of plugs 21, 22. For the sake of simplicity similar elements of the two embodiments are indicated by the same numbering plus one hundred in the case of the variant of Fig. 3. In this variant a plug 121 (the other plug pair can of course be similar) is supported on the actuator 133 in a manner running axially along a shaft 150 against the action of a pressing spring 151. The shaft 150 runs staunchly in an axial seat 153 in the plug. The seat 153 is connected in an intermediate position to a duct 129 in turn connected to the washing fluid circuit by means of an extensible tube 131. The end of the seat 153 nearest the actuator is sealed by means of an O-ring 154. The end of the seat 153 towards the filter is normally closed by the free end of the shaft 150 by means of O-rings 155. Between the two O-rings the shaft 150 has a lowered cross section zone 152.

When the plug is pressed against the collar of a filter, the spring 151 is compressed and the shaft can advance to the position shown in broken lines. In this manner the seat 153 is opened towards the filter and the washing fluid can thus run through the filter.

In this manner there are provided automatic valve means and the valve means controlled by the control device 39 are no longer needed.

Such a solution is particularly advantageous if multiple plug pairs are used for optional multiple washing operations. Indeed, as readily imaginable to those skilled in the art, there can be provided a truck supporting several plugs to act simultaneously on several side-by-side filters, or several trucks each with one or more plugs.

By using an automatic valve such as the one in Fig. 3 the control device 39 must only bring into contact with the filters the required plugs and the connection to the washing fluid circuit is automatic while the plugs not used remain isolated from the circuit.

Additional variants can of course be imagined by those skilled in the art. For example, the filters can be arranged even in several parallel rows and there can be provided multiple plugs arranged in rows and columns and operated individually or in groups. In addition, the exact form and sizing of the system will be a function of the particular practical application. Lastly, the automatic valves with opening caused by bringing the plug against the filter can differ from those shown as readily imaginable to those skilled in the art.

## Claims

1. System (10) for treatment of a process fluid flow by means of a passage through treatment filters (18) comprising upstream and downstream of the filters movable means (19, 20) of selective connection of said filters with a washing fluid circulation path.

2. System in accordance with claim 1 characterised in that the washing fluid circulation path comprises movable ducts (31, 32) for connection to movable connection means (19, 20).

3. System in accordance with claim 1 characterised in that the connection means (19, 20) comprise means (23, 24, 33, 34, 133) of moving plugs (21, 22, 121) substantially staunch at input and output ends (41, 42, 141) of a filter (18) for its isolation from the process fluid flow with each plug (21, 22, 121) comprising ducts (29, 30, 129, 153) for connection of the isolated filter to said washing fluid circulation path.

4. System in accordance with claim 3 characterised in that the movement means comprise actuators (33, 34, 133) for moving the plugs parallel to the direction of passage through the filters by the process fluid flow, the moving being between a position separated from the filter or passage through the filter of the process fluid flow, and a position against or of connection of the filter to the washing fluid circulation path.

5. System in accordance with claim 3 characterised in that the movement means comprise means (23, 24) for selective facing of the plugs on filters to be connected to said washing fluid circulation path.

6. System in accordance with claim 5 characterised in that the filters are a plurality of mutually parallel filters substantially side-by-side in a plane transverse to the process fluid flow with the facing means comprising at least one truck (23, 24) for support of plugs and said truck running substantially parallel to said plane to carry plugs into position facing selected filters of the plurality.

7. System in accordance with claim 6 characterised in that the trucks (23, 24) run in process fluid flow collection chambers (13, 14) arranged immediately upstream and downstream of the filters.

8. System in accordance with claim 3 characterised in that said plug ducts are connected to the washing fluid circulation path through selectively activable valve means (35, 37, 152).

9. System in accordance with claim 8 characterised in that the valve means comprise valves (152) opening upon the substantially sealing connection movement of the corresponding plugs.

10. System in accordance with claim 9 characterised in that the valves are provided as running shafts (150) for axial support of the plugs (121) and upon reaching the connection position the plug being thrust to run on the shaft against the action of a spring (151) to open a passage (153) of connection to the washing fluid circulation path.

11. System in accordance with claim 3 characterised in that the movement means are connected to a control device (39) sending timed signals for cyclic connection of the filters to the washing fluid circulation path.

12. System in accordance with claim 1 characterised in that the washing and regeneration fluid is steam.

13. System in accordance with claim 1 characterised in that the filters comprise activated carbon elements.
